(19) Europäisches Patentamt
European Patent Office
Office européen des brevets

(11) Publication number: **0 236 095 B1**

(12) # EUROPEAN PATENT SPECIFICATION

(45) Date of publication of patent specification: **28.08.91 Bulletin 91/35**

(51) Int. Cl.$^5$: **H01G 9/02**

(21) Application number: **87301768.5**

(22) Date of filing: **27.02.87**

(54) **An electrolyte for an electrolytic capacitor.**

(30) Priority: **28.02.86 JP 41738/86**

(43) Date of publication of application: **09.09.87 Bulletin 87/37**

(45) Publication of the grant of the patent: **28.08.91 Bulletin 91/35**

(84) Designated Contracting States: **DE FR GB**

(56) References cited:
**DE-A- 3 328 635**
**CHEMICAL ABSTRACTS, vol. 105, no. 12, 22nd September 1986, page 628, abstract no. 106931f, Columbus, Ohio, US; & JP-A-61 32 509 (MATSUSHITA ELECTRIC WORKS, LTD) 15-02-1986**

(73) Proprietor: **NIPPON CHEMI-CON CORPORATION**
**No. 167-1, Higashi Ome 1-chome**
**Ome-shi Tokyo (JP)**

(72) Inventor: **Shinozaki,Fumihiko**
**c/0 Nippon Chemi-Con Corp,167-1,1-chome**
**Hagashi-Ome,Ome-shi,Tokyo (JP)**
Inventor: **Yokoyama,Yutaka**
**c/o Nippon Chemi-Con Corp,167-1,1-chome**
**Hagashi-Ome,Ome-shi,Tokyo (JP)**

(74) Representative: **Bannerman, David Gardner et al**
**Withers & Rogers 4 Dyer's Buildings Holborn**
**London, EC1N 2JT (GB)**

**EP 0 236 095 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an electrolyte for an electrolytic capacitor containing an aprotic solvent and a fluorocomplex acid salt of an alkylene bisamine compound as solute.

Hitherto, organic acids or their salts and glycol series pastes have been principally used as electrolytes for electrolytic capacitors. The latest expansion of uses of electronic instruments requires an improvement in the reliability and performance of such capacitors entailing avoidance of the presence of water in the paste and as a result an electrolyte using an aprotic solvent in place of organic acids and their salts and glycol pastes has attracted interest.

The most important property that should be possessed by an aprotic solvent system electrolyte is high conductivity and in order to achieve this an organic carboxylic acid or a salt thereof which is highly soluble in the aprotic solvent and has a high degree of dissociation therein has been sought but so far unsuccessfully. In order to attain sufficiently high conductivity, a solvent which produces water by the reaction between an acid and an alcohol or glycol, or even water itself has been incorporated into the aprotic solvent, as disclosed in Japanese patent. publications No.55-3989, 57-56763, 58-32769 and U.S. patent No.4,117,531, but performance and reliability are still unsatisfactory.

After extensive researches and studies to obtain an electrolyte which is substantially a non-aqueous electrolyte and has a high conductivity with use of an aprotic solvent but without using any solvent which forms water by the reaction between an acid and an alcohol or glycol, it has been discovered that a fluorocomplex acid salt of an alkylene bisamine compound has a high solubility in aprotic solvents and provides a high conductivity.

An electrolyte for an electrolytic capacitor according to the invention comprises a solution of a fluorocomplex acid salt of an alkylene bisamine compound in an aprotic solvent.

The alkylene bisamine compounds according to the invention is preferably selected from the compounds having the general formula :

$$R^2N - R^1 - NR^2$$

in which $R^1$ is straight or side chain alkylene group $-C_nH_{2n}-$ in which n is an integer of 2 to 6 ; $R^2$ comprises from 1 to 3 hydrogen, lower alkyl groups or lower alkenyl groups and forms a primary, secondary or tertiary amine group, or a quaternary ammonium group together with the nitrogen atom N.

The alkylene group forming the alkylene bisamine compound may for example be an ethylene group, propylene group

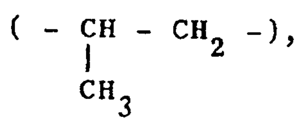

trimethylene group, pentamethylene group, or hexamethylene group. The bisamine compound is formed by the bonding of the alkylene group $R^1$ with the amine groups, in which said amine groups are primary amine groups ( $-NH_2$ ), secondary amine groups ( $-NHR$ ), tertiary amine groups ( $-N(R)_2$) or quaternary ammonium groups ( $-N^+(R)_3$), in which R is a lower alkyl group or lower alkenyl group, and in the case of $(R)_2$ or $(R)_3$ the R groups are preferably the same from the point of view of industrial use and cost, but may be different from one another.

The alkylene bisamine compound preferably used in the invention may be selected from the following but is not limited thereto :

ethylenediamine [ $NH_2(CH_2)_2NH_2$ ]

hexamethylenediamine [ $NH_2(CH_2)_6NH_2$ ]

propylene.bis(methylamine) [ $CH_3HNCHCH_2NHCH_3$ ]
$\qquad\qquad\qquad\qquad\qquad\qquad\qquad\qquad | $
$\qquad\qquad\qquad\qquad\qquad\qquad\qquad\qquad CH_3$

trimethylene.bis(di-t-buthylamine)

$[[(CH_3)_3C]N(CH_2)_3N[C(CH_3)_3]]$

tetramethylene.bis(diallylamine)

$[(CH_2 = CHCH_2)_2N(CH_2)_4N(CH_2CH = CH_2)_2]$

hexamethylene.bis(trimethylammonium

$[(CH_3)_3N(CH_2)_6N(CH_3)_3]^{2+}$

The fluorocomplex acid to be used in the invention may for example be tetrafluoroboric acid ($HBF_4$) or hexafluorophosphoric acid ($HPF_6$).

The aprotic solvent to be used in the invention may be selected from the following but is not limited thereto :

(1) Amides : N-methylformamide, N,N-dimethylformamide, N-ethylformamide, N,N-diethylformamide, N-methylacetoamide, N,N-dimethylacetoamide, N-ethylacetoamide, N,N-diethylacetoamide, hexamethylphosphorinamide

(2) Oxides : dimethyl sulfoxide

(3) Nitriles : acetonitrile

(4) Cyclic esters, cyclic amides : γ-butyrolactone, N-methyl-2-pyrrolidone, ethylene carbonate, propylene carbonate.

An electrolyte for an electrolytic capacitor according to the invention may conveniently be prepared by adding to an aqueous solution of the fluorocomplex acid salt at least one equivalent, and preferably two equivalents, of the alkylene bisamine compound with subsequent vacuum drying to obtain an anhydrous salt which as an approximately 10% by weight solution is then added to the aprotic solvent to prepare the resultant electrolyte.

The conductivity of examples of electrolytes according to the invention are shown as examples 1 to 13 in Table 1. In each case the electrolyte comprises a 10% (by weight) of the fluorocomplex acid salt.

Further, as a reference example the conductivity of a conventional electrolyte composed of 78% by weight of ethylene glycol, 12% by weight of water and 10% by weight of ammonium adipate is shown also in Table 1.

TABLE 1

| Example | Fluorocomplex acid salt of alkylene bisamine compound | Aprotic Solvent | Conductivity (ms/cm) |
|---|---|---|---|
| 1 | ethylenediamine ditetrafluoroborate | N-methyl-2-pyrrolidone | 7.8 |
| 2 | ethylene.bis(methylamine) ditetrafluoroborate | γ-butyrolactone | 12.7 |
| 3 | ethylene.bis (dimethylamine) ditetrafluoroborate | N,N-dimethylformamide | 19.3 |
| 4 | tetramethylene.bis (diallylamine) ditetrafluoroborate | acetonitrile | 24.0 |
| 5 | ethylenediamine dihexafluorophosphate | N-methylpyrrolidone | 7.1 |
| 6 | ethylene.bis(methylamine) dihexafluorophosphate | γ-butyrolactone | 10.2 |
| 7 | ethylene.bis (dimethylamine) dihexafluorophosphate | N,N-dimethylformamide | 15.6 |
| 8 | tetramethylene.bis (diallylamine) dihexafluorophosphate | acetonitrile | 19.3 |
| 9 | propylene.bis(methylamine) ditetrafluoroborate | N-methylformamide | 12.2 |
| 10 | propylene.bis(methylamine) monotetrafluoroborate | N-methylformamide | 14.0 |
| 11 | trimethylene.bis (di-t-butylamine) ditetrafluoroborate | N-methylformamide | 11.5 |

| | | | |
|---|---|---|---|
| 12 | hexamethylenediamine tetrafluoroborate | dimethyl sulfoxide | 8.7 |
| 13 | hexamethylene.bis (trimethylammonium) diborontetrafluoride $[(CH_3)_3N(CH_2)_6N(CH_3)_3]^{2+}2BF_4^-$ | dimethyl sulfoxide | 9.1 |
| Ref. | ethylene glycol 78% by weight<br>water 12% by weight<br>ammonium adipate 10% by weight | | 6.7 |

Results of high-temperature load tests performed at 16V 180 micro F for the electrolytes of Examples 1 to 13 and the same reference examples are shown in Table 2.

TABLE 2

| | Initial Value | | | 110 deg.C 1000 hours | | |
|---|---|---|---|---|---|---|
| Example | Capacity μF | tan δ | Leakage Current μA | Capacity μF | tan δ | Leakage Current μA |
| 1 | 178 | 0.078 | 0.53 | 169 | 0.094 | 0.51 |
| 2 | 179 | 0.064 | 0.61 | 174 | 0.070 | 0.58 |
| 3 | 183 | 0.046 | 0.64 | 170 | 0.060 | 0.60 |
| 4 | 184 | 0.033 | 0.56 | 166 | 0.049 | 0.53 |
| 5 | 177 | 0.080 | 0.55 | 168 | 0.104 | 0.52 |
| 6 | 178 | 0.072 | 0.61 | 173 | 0.079 | 0.56 |
| 7 | 180 | 0.057 | 0.58 | 167 | 0.080 | 0.55 |
| 8 | 180 | 0.047 | 0.62 | 162 | 0.071 | 0.59 |
| 9 | 179 | 0.065 | 0.57 | 175 | 0.072 | 0.54 |
| 10 | 180 | 0.061 | 0.60 | 176 | 0.067 | 0.52 |
| 11 | 179 | 0.068 | 0.54 | 171 | 0.073 | 0.50 |
| 12 | 177 | 0.076 | 0.59 | 172 | 0.091 | 0.56 |
| 13 | 177 | 0.075 | 0.55 | 169 | 0.090 | 0.51 |
| Ref. | 176 | 0.085 | 0.72 | 150 | 0.128 | 0.71 |

## Claims

1. An electrolyte for an electrolytic capacitor characterised in that it comprises a solution of a fluorocomplex acid salt of an alkylene bisamine compound in an aprotic solvent.

2. An electrolyte for electrolytic capacitors comprising an aprotic solvent and a fluorocomplex acid salt of an alkylene bisamine compound of general formula :

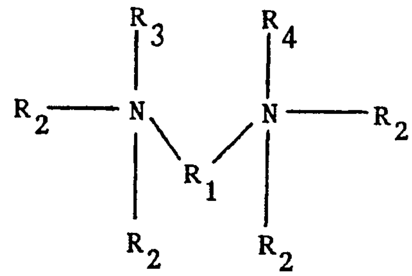

in which $R_1$ is a linear or branched alkylene group of the formula $C_nH_{2n}$ in which n is an integer from 2 to 6, and each $R_2$ is independently selected from hydrogen, alkyl groups having 1 to 8 carbon atoms and alkenyl groups having 1 to 8 carbon atoms, $R_3$ and $R_4$ which may be the same or different, are absent or are hydrogen or are the same as $R_2$.

3. An electrolyte for an electrolytic capacitor according to claim 1 or 2, characterised in that the aprotic solvent is :

N-methylformamide, N, N-dimethylformamide, N-ethylformamide, N, N-diethylformamide, N-methylacetamide, N, N-diemethylacetamide, N-ethylacetamide, N, N-diethylacetamide, γ-butyrolactone, N-methyl-2-pyrrolidone, ethylene carbonate, propylene carbonate, dimethyl sulfoxide, acetonitrile or a mixture of two or more thereof.

4. An electrolyte for an electrolytic capacitor according to any preceding Claim characterised in that the fluorocomplex acid is tetrafluoroboric acid or hexafluorophosphoric acid.

**Patentansprüche**

1. Elektrolyt für einen Elektrolytkondensator, dadurch **gekennzeichnet**, daß er die Lösung eines Fluorkomplexsäuresalzes einer Alkylenbisaminverbindung in einem aprotischen Lösungsmittel darstellt.

2. Elektrolyt für Elektrolytkondensatoren, dadurch **gekennzeichnet**, daß er ein aprotisches Lösungsmittel und ein Fluorkomplexsäuresalz einer Alkylenbisaminverbindung der allgemeinen Formel

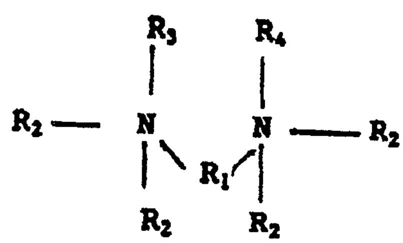

umfaßt, worin $R_1$ eine unverzweigte oder verzweigte Alkylengruppe der Formel $C_nH_{Zn}$ bedeutet, in der n für cinc ganze Zahl von 2 bis 6 steht, und $R_Z$ jeweils unabhängig voneinander ausgewählt ist unter Wasserstoff, $C_{1-8}$-Alkyl und $C_{1-8}$-Alkenyl und $R_3$ und $R_4$, welche dieselbe oder unterschiedliche Bedeutung haben, entweder fehlen oder Wasserstoff bedeuten oder dieselbe Bedeutung wie $R_2$ haben können.

3. Elektrolyt für einen Elektrolytkondensator nach Anspruch 1 oder 2, dadurch **gekennzeichnet**, daß das aprotische Lösungsmittel folgende Verbindungen darstellt :

N-Methylformamid, N,N-Dimethylformamid, N-Ethylformamid, N,N-Diethylformamid, N-Methylacetamid, N,N-Dimethylacetamid, N-Ethylacetamid, N,N-Diethylacetamid, γ-Butyrolacton, N-Methyl-2-pyrrolidon, Ethylencarbonat, Propylencarbonat, Dimethylsulfoxid, Acetonitril oder ein Gemisch aus zwei oder mehreren dieser Verbindungen.

4. Elektrolyt für einen Elektrolytkondensator nach einem der vorangegangenen Ansprüche, dadurch **gekennzeichnet**, daß die Fluorkomplexsäure Tetrafluorborsäure oder Hexafluorphosphorsäure ist.

**Revendications**

1. Electrolyte pour condensateur électrolytique, caractérisé en ce qu'il comprend une solution d'un sel d'acide fluorocomplexe d'un composé alkylènebisamine dans un solvant aprotique.

2. Electrolyte pour condensateurs électrolytiques, comprenant un solvant aprotique et un sel d'acide fluorocomplexe d'un composé alkylènebisamine de formule générale :

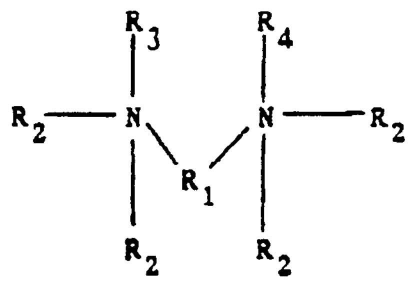

dans laquelle $R_1$ est un groupe alkylène linéaire ou ramifié de formule $C_nH_{2n}$, dans laquelle n est un nombre entier de 2 à 6 et chaque $R_2$ est indépendamment choisi parmi un hydrogène, des groupes alkyle comportant 1 à 8 atomes de carbone et des groupes alcényle comportant 1 à 8 atomes de carbone, $R_3$ et $R_4$, qui peuvent être identiques ou différents, sont absents ou sont des atomes d'hydrogène, ou sont identiques à $R_2$.

3. Electrolyte pour condensateur électrolytique selon la revendication 1 ou 2, caractérisé en ce que le solvant aprotique est :

le N-méthylformamide, le N,N-diméthylformamide, le N-éthylformamide, le N,N-diéthylformamide, le N-méthylacétamide, le N,N-diméthylacétamide, le N-éthylacétamide, le N,N-diéthylacétamide, la γ-butyrolactone, la N-méthyl-2-pyrrolidone, le carbonate d'éthylène, le carbonate de propylène, le diméthylsulfoxyde, l'acétonitrile ou un mélange de deux ou plus d'entre eux.

4. Electrolyte pour condensateur électrolytique selon l'une quelconque des revendications précédentes, caractérisé en ce que l'acide fluorocomplexe est l'acide tétrafluoroborique ou l'acide hexafluorophosphorique.